# EUROPÄISCHE PATENTSCHRIFT

(11) **EP 1 592 607 B1**
(45) Veröffentlichungstag und Bekanntmachung des Hinweises auf die Patenterteilung: **04.10.2006**
(21) Anmeldenummer: 04710035.9
(22) Anmeldetag: 11.02.2004
(51) Int. Cl.: B62D 33/073, B60K 26/04

(54) **LASTKRAFTWAGEN**
LORRY
CAMION

(30) Priorität: 15.02.2003 DE 10306368
(43) Veröffentlichungstag der Anmeldung: 09.11.2005
(73) Patentinhaber: DaimlerChrysler AG, 70567 Stuttgart (DE)
(72) Erfinder: HEILMAN, Harro, 73760 Ostfildern (DE); SCHWARZHAUPT, Andreas, 74420 Oberrot (DE); SPIEGELBERG, Gernot, 71296 Heimsheim (DE); STAHL, Wolfgang, 72644 Oberboihingen (DE); SULZMANN, Armin, 68723 Oftersheim (DE)
(86) Internationale Anmeldenummer: PCT/EP2004/001262
(87) Internationale Veröffentlichungsnummer: WO 2004/074075

(56) Entgegenhaltungen:
- EP-A- 0 248 322
- US-A- 3 602 869

## Beschreibung

Die Erfindung betrifft einen Lastkraftwagen mit einem einen Rahmen und Achsen umfassenden Fahrzeugchassis und mit einer am Fahrzeugchassis angebrachten Fahrerkabine.

Aus der DE 29 34 272 A1 ist ein Lastkraftwagen mit einem einen Rahmen und Achsen umfassenden Fahrgestell und einem darauf angeordneten Fahrerhaus bekannt. Das Fahrerhaus ist zweigeteilt in einen Kabinensockel, der im wesentlichen den Fahrerhausboden und alle daran abgestützten Ausstattungskomponenten, wie z.B. Sitze und Aufstiege, sowie Bedienelemente, wie z.B. Lichtschalter und Pedalerie, zur Betätigung chassisseitiger Komponenten, wie z.B. Beleuchtungseinrichtungen, Bremsanlage und Motorsteuerung, aufweist und der dem Fahrgestell angepasst ist und in ein standardisiertes Kabinenoberteil, das im wesentlichen aus Frontwand, Seitenwänden mit Türen, Rückwand und Dach besteht, wobei das Kabinenoberteil lösbar auf dem Kabinensockel befestigt ist. Hierdurch können für verschiedenartigste Fahrgestelle, wie sie durch verschiedene Achslagen, verschiedene Radgrößen oder sonstige unterschiedliche Zweckbestimmungen des Fahrzeugs verursacht sind, immer baugleiche Kabinenoberteile verwendet werden, d.h. dass für alle nur Lastkraftwagenmodelle ein und dasselbe Kabinenoberteil anwendbar wird. Lediglich der Kabinensockel muss, statt wie bisher das ganze Fahrerhaus, der jeweiligen speziellen Ausführungsform des Fahrgestells angepasst werden.

Aus der JP 63162381 A ist ein abnehmbares Kabinenoberteil für Traktoren bekannt, welches im wesentlichen ein Dach, eine Front- und eine Rückwand aufweist, und wobei die Ausstattungskomponenten, wie z.B. ein Sitz, Pedalerie und eine Lenkhandhabe, stationär am Fahrzeug angeordnet sind.

Aus der DE 93 03 516 U1 ist ein Gleiskraftwagen bekannt, der ein einen Rahmen und Achsen umfassendes Fahrzeugchassis aufweist. Am Fahrzeugchassis ist eine Fahrerkabine kippbar angebracht, welche Ausstattungskomponenten, einen Kabinenboden sowie ein Kabinengehäuse und Bedienelemente aufweist. Die Bedienelemente sind mit zugehörigen Komponenten des Fahrzeugchassis verbunden und dienen zu deren Betätigung. Desweiteren ist eine durch Steckverbindungen gebildete Schnittstellenanordnung vorgesehen, über welche flexible Leitungen unterhalb des Kabinenbodens mit zugehörigen Leitungen aus der Kabine koppelbar sind. Insbesondere können dadurch Bedienelemente der Fahrerkabine mit zugehörigen Komponenten des Fahrzeugchassis trennbar verbunden werden.

Aus der US 5,316,347 ist eine hydraulische Schnellkupplung bekannt, die insbesondere als hydraulische Schnittstelle verwendbar ist.

Aus der US 3,602,869 ist ein Lastkraftwagen nach dem Oberbegriff in Anspruch 1 bekannt.

Die vorliegende Erfindung beschäftigt sich mit dem Problem, für eine Fahrerkabine eines Lastkraftfahrzeugs eine verbesserte Ausführungsform anzugeben, bei der insbesondere die Wartungsfreundlichkeit des Lastkraftwagens erhöht werden soll.

Diese Aufgabe wird durch den Gegenstand des unabhängigen Anspruchs gelöst, vorteilhafte Ausgestaltungen sind Gegenstand der abhängigen Ansprüche.

Die Erfindung beruht auf dem allgemeinen Gedanken, bei einem Lastkraftwagen eine Fahrerkabine als abnehmbare Einheit auszubilden und lösbar an einem Fahrzeugchassis zu befestigen.

Hierzu wird eine Schnittstellenanordnung vorgeschlagen, über welche sämtliche Bedienelemente der Fahrerkabine mit den zugehörigen Komponenten des Fahrzeugchassis trennbar verbunden sind. Bei herkömmlichen Lastkraftwagen kann das Fahrerhaus zu Wartungszwecken kippbar gestaltet sein. Für größere Arbeiten, wie z.B. den Ausbau des Motors, muss jedoch in manchen Fällen auch das Fahrerhaus komplett abgenommen werden. Die zum Kippvorgang notwendigen Lager sind jedoch aufwändig und teuer, die Struktur des Fahrerhauses muss hierfür ausgelegt sein. Auch die heutzutage üblichen mechanischen Verbindungen zu den Bedienelementen, wie z.B. Lenksäule, Gas- und Bremspedal sowie Verbindungsleitungen, müssen so ausgelegt werden, dass das Kippen problemlos möglich ist. Bei Wartungsarbeiten, die ein komplettes Entfernen der Fahrerkabine nötig machen, ist es unerlässlich, sämtliche Verbindungen (mechanische, elektrische, etc.) zwischen dem Fahrzeugchassis und der Fahrerkabine zu trennen. Dies ist bei heutigen Fahrzeugen jedoch aufwändig und teuer. Die erfindungsgemäße Lösung sieht hierzu vor, dass zu Wartungszwecken die Fahrerkabine angehoben und sämtliche Bedienelemente der Fahrerkabine an der Schnittstellenanordnung von den zugehörigen Komponenten des Fahrzeugchassis einfach und schnell getrennt werden können. Von besonderem Vorteil sind hierbei die bessere Wartbarkeit der Fahrzeuge im Feld, ein besseres Handling in der Werkstatt und die Möglichkeit niedrigere Werkstatthallen zu benutzen.

Die Fahrerkabine, welche von einem Kabinengehäuse mit einer Frontwand, Seitenwänden mit Türen, einer Rückwand und einem Boden umschlossen ist und in ihrem Inneren Ausstattungskomponenten, wie z.B. Sitze, ein Armaturenbrett, sowie Bedienelemente, wie z.B. Schalter, Pedalerie, etc., aufweist, ist gemäß der Erfindung als abnehmbare Einheit ausgebildet. Dies ermöglicht es, die Fahrerkabine als autonome Einheit vorzufertigen und zum Ende des Produktionsprozesses auf dem Fahrzeugchassis anzuordnen und über die Schnittstellenanordnung mit diesem zu verbinden. Gleichzeitig ist durch die Erfindung der immer mehr an Einfluss gewinnende Einsatz von "Steer by wire" und/oder "Break by wire" Steuerungen einfacher möglich.

Beim erfindungsgemäßen Lastkraftwagen ist vorgesehen, dass das Fahrzeugchassis bei abgenommener Fahrerkabine mit einer externen Bedieneinrichtung steuerbar ist, wobei die externe Bedieneinrichtung bei einer Weiterbildung als Fernsteuerung ausgebildet sein kann. Bei größeren Wartungsarbeiten, bei denen die Fahrerkabine komplett abgenommen werden muss, besteht bei herkömmlichen Lastkraftwagen die Problematik, dass das Fahrzeugchassis ohne die Bedienelemente, welche in der Fahrerkabine angeordnet sind, nur schwierig zu bewegen bzw. zu steuern ist. Die Erfindung sieht hierzu vor, eine externe Bedieneinrichtung, die günstigen Falls als Fernsteuerung ausgebildet ist, über die Schnittstellenanordnung an wenigstens eine Komponente des Fahrzeugchassis anzuschließen und damit Funktionen, wie z.B. das Starten des Motors, das Vor- und Zurücksetzen des Fahrzeugs oder das Ein- und/oder Ausschalten einer Beleuchtungseinrichtung, zu betätigen. Hierdurch kann die Mobilität des Fahrzeugchassis, welches bisher ohne Fahrerkabine bzw. den darin installierten Bedienelementen, nur schwierig zu bewegen war, deutlich gesteigert werden. Gleichzeitig ist es möglich, einzelne Komponenten des Fahrzeugchassis, wie z.B. Motor, Beleuchtungseinrichtung oder Ähnliches, zu überprüfen bzw. in Gang zu setzen, wodurch die Wartungsfreundlichkeit erhöht werden kann.

Gemäß einer besonders günstigen Ausführungsform kann vorgesehen sein, dass die Schnittstellenanordnung durch Steckverbindungen gebildet ist und/oder dass die Steckverbindungen standardisiert ausgebildet sind. Nach dem Anheben der Fahrerkabine ist es dadurch problemlos möglich, die Bedienelemente der Fahrerkabine von den zugehörigen Komponenten des Fahrzeugchassis zu trennen. Insbesondere als Schnellkopplungsmittel ausgebildete Steckverbindungen erweisen sich hierbei als einfach und schnell zu trennen bzw. wieder zusammenzufügen. Das bisher notwendige und aufwändige Auseinanderbauen von mechanischen Verbindungen und/oder elektrischen Verkabelungen kann entfallen, was Zeit und Kosten spart. Gleichzeitig ist es durch die standardisierten Steckverbindungen möglich, unterschiedliche Fahrerkabinen mit jeweils unterschiedlichen Fahrzeugchassis zu verbinden, wodurch die Flexibilität beim Zusammenbau von Fahrerkabine und Fahrzeugchassis erhöht wird.

Eine besonders günstige Weiterbildung der Erfindung ist gekennzeichnet durch mobile und/oder fahrzeugfeste, ausfahrbare Stützen, mit denen die Fahrerkabine anhebbar ist. Die mobilen und/oder fahrzeugfesten Stützen funktionieren analog zu einem Wagenheber und bewirken, dass das Fahrerhaus so weit angehoben wird, dass das Fahrzeugchassis inklusive Antriebseinrichtung mit der Fernsteuerung unter der Fahrerkabine weggefahren (alternativ natürlich auch weggezogen, z.B. bei defekter Antriebseinrichtung) werden kann. Von besonderem Vorteil sind hierbei die bessere Wartbarkeit der Lastkraftwagen im Feld, das bessere Handling in der Werkstatt sowie der autonome Betrieb der Lastkraftwagen ohne die Fahrerkabine. Darüber hinaus ist es möglich, dass die fahrzeugfesten Stützen in die Fahrerkabine integriert sind. Dies bedeutet, dass ein Trennen von Fahrerkabine und Fahrzeugchassis auch im Feld möglich ist, wodurch die Lastkraftwagen außerhalb von Werkstätten instand gesetzt werden können. Gleichzeitig können bei dieser Ausführungsvariante die in den Werkstätten üblicherweise vorzuhaltenden Fahrzeugstützen eingespart werden, was Lagerplatz und Kosten spart.

Weitere wichtige Merkmale und Vorteile der Erfindung ergeben sich aus den Unteransprüchen, aus den Zeichnungen und aus den zugehörigen Figurenbeschreibungen anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in den nachfolgenden Beschreibungen näher erläutert, wobei sich Besugszeichen auf gleiche oder ähnliche oder funktional gleiche Bauteile beziehen.

Dabei zeigen:
- Fig. 1: eine perspektivische Ansicht eines erfindungsgemäßen Lastkraftwagens,
- Fig. 2: eine Fahrerkabine mit fahrzeugfesten und ausfahrbaren Stützen.

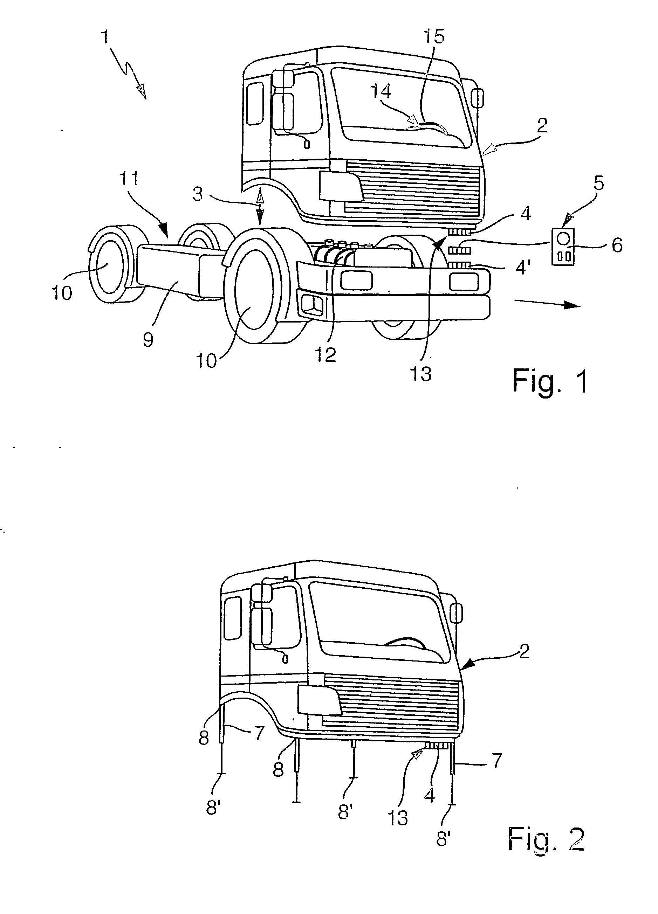

Entsprechend Fig. 1 weist ein erfindungsgemäßer Lastkraftwagen 1 ein einen Rahmen 9 und Achsen 10 umfassendes Fahrzeugchassis 11 sowie eine lösbar am Fahrzeugchassis 11 befestigte Fahrerkabine 2 auf. Die Fahrerkabine 2 umfasst nicht näher bezeichnete Ausstattungskomponenten, wie z.B. Sitze, Armaturenbrett, Schlafgelegenheit, etc., sowie Bedienelemente 14, wie z.B. Pedalerie, Betätigungsschalter, Lenkrad, etc., und wird von einem Kabinengehäuse mit Front- und Rückwand sowie Seitenwänden mit Türen und einem Dach sowie einem Kabinenboden umschlossen. Die Bedienelemente 14, wie z.B. eine Lenkhandhabe 15, sind mit zugehörigen Komponenten des Fahrzeugchassis 11, in diesem Fall mit einer nicht näher bezeichneten Lenkeinrichtung, verbunden und dienen zu deren Betätigung. Weitere Bedienelemente 14 bzw. zugehörige Komponenten am Fahrzeugchassis 11 können beispielsweise die nicht in den Figuren eingezeichneten Paare aus folgender Gruppe umfassen: Bremspedal und Bremseinrichtungen, Gaspedal und Antriebseinrichtung 12, elektrische Schalter und Beleuchtungseinrichtung, elektrische Schalter und Hydrauliksysteme, z.B. für einen Kipplader, etc.. Die Fahrerkabine 2 ist dabei als im wesentlichen in Anheberichtung 3 abnehmbare Einheit ausgebildet.

Zwischen dem Fahrzeugchassis 11 und der Fahrerkabine 2 ist eine Schnittstellenanordnung 13 vorgesehen, über welche sämtliche Bedienelemente 14 der Fahrerkabine 2 mit den jeweils zugehörigen Komponenten des Fahrzeugchassis 11 trennbar verbunden sind. In Fig. 1 ist der Übersicht halber für die Schnittstellenanordnung 13 lediglich eine einzige Schnittstelle eingezeichnet, es ist jedoch klar, dass die Schnittstellenanordnung 13 mehrere Schnittstellen zwischen der Fahrerkabine 2 und dem Fahrzeugchassis 11 umfassen kann. Günstiger Weise ist die Schnittstellenanordnung 13 bzw. sind deren Schnittstellen in Form wenigstens einer Steckverbindung 4, 4' ausgebildet, wobei dann der eine Teil 4 der Steckverbindung an der Fahrerkabine 2 und der andere Teil 4 der Steckverbindung am Fahrzeugchassis 11 angeordnet ist. Denkbar ist auch, dass die jeweilige Steckverbindung 4, 4' standardisiert ausgebildet ist, so dass unterschiedliche Fahrerkabinen 2 mit unterschiedlichen Fahrzeugchassis 11 kombinierbar sind und dass die Steckverbindung 4 durch Schnellkopplungsmittel, wie z.B. Clip-Verschlüsse, gebildet wird.

Gemäß Fig. 1 kann die Fahrerkabine 2 in Anheberichtung 3 vom Fahrzeugchassis 11 abgenommen werden, so dass die ursprünglich durch die Fahrerkabine 2 verdeckte Antriebseinrichtung 12 zugänglich wird. Bei abgenommener Fahrerkabine 2 kann an das chassisseitige Teil 4 der Steckverbindung eine externe Bedieneinrichtung 5, welche vorzugsweise als Fernsteuerung 6 ausgebildet ist, angeschlossen werden, mit der wenigstens eine Komponente des Fahrzeugchassis 11, beispielsweise die Antriebseinrichtung 12, die Bremseinrichtung und/oder die Lenkeinrichtung, betätigbar ist, so dass das Fahrzeugchassis 11 auch ohne aufgesetzte Fahrerkabine 2 in gewissem Umfang mobil ist. Über die Fernsteuerung 6 ist es möglich, sämtliche Steuerbefehle, wie z.B. Gas, Bremse, Licht, etc., welche normalerweise von den in der Fahrerkabine 2 angeordneten Bedienelementen 14 ausgesandt werden, nun über die externe Fernsteuerung 6 abzugeben und damit beispielsweise die Antriebseinrichtung 12 zu steuern.

Die Fahrerkabine 2 ist an Aufhängungspunkten 8 bzw. 8' mit dem Fahrzeugchassis 11 verbunden, wobei die Verbindung insbesondere als Schraubverbindung ausgebildet sein kann. Gemäß einer ersten Variante sind die Aufhängungspunkte 8 an einem unteren Ende der Fahrerkabine 2, bzw. an einem oberen Ende von ausfahrbaren Stützen 7 angeordnet, wogegen bei einer zweiten Variante die Aufhängungspunkte 8' an einem unteren Ende der ausfahrbaren Stützen 7 angeordnet sind.

Die ausfahrbaren Stützen 7 dienen zum Anheben der Fahrerkabine 2 in Anheberichtung 3 und sind entweder mobil oder fahrzeugfest ausgebildet. Die Aufhängungspunkte 8 dienen als Angriffspunkt für mobile Stützen 7, wogegen die Aufhängungspunkte 8' für fahrzeugfeste Stützen vorgesehen sind. Bei einer fahrzeugfesten Ausbildung der Stützen 7 sind diese vorzugsweise in die Fahrerkabine 2 integrierbar.

Im Folgenden soll kurz die Funktionsweise der Erfindung näher erläutert werden:
Bei Wartungsarbeiten, zu denen die Fahrkabine 2 komplett abgenommen werden muss, werden gemäß einer ersten Variante zunächst die Verbindungen zwischen der Fahrerkabine 2 und dem Fahrzeugchassis 11 gelöst. Danach wird die Steckverbindung 4 an der Schnittstellenanordnung 13 zwischen der Fahrerkabine 2 und dem Fahrzeugchassis 11 gelöst, so dass keine mechanischen Verbindungen mehr zwischen der Fahrkabine 2 und dem Fahrzeugchassis 11 bestehen. An die Schnittstellenanordnung 13 kann nun ein externes Bedienelement 5 bzw. eine Fernsteuerung 6 angeschlossen werden. Hierauf werden die mobilen und/oder fahrzeugfesten Stützen 7 anlog einem Wagenheber an den Aufhängungspunkten 8,8' angesetzt und mit diesen die Fahrerkabine 2 soweit angehoben, dass das Fahrzeugchassis 11 mit der Fernsteuerung 6 unter der Fahrerkabine 2 weggefahren (alternativ bei defekter Antriebseinrichtung 12 auch weggezogen) werden kann. Hierdurch verbessert sich insbesondere die Wartbarkeit der Lastkraftwagen 1, das Handling in der Werkstatt sowie der autonome Betrieb des Lastkraftwagens 1 ohne Fahrerkabine 2.

Gemäß einer anderen Variante ist aber auch denkbar, nach dem Lösen der Verbindung zwischen der Fahrerkabine 2 und dem Fahrzeugchassis 11, zunächst die mobilen und/oder fahrzeugfesten Stützen 7 anzusetzen und die Fahrerkabine 2 anzuheben und erst danach, falls nötig, die Steckverbindung 4 an der Schnittstellenanordnung 13 zu lösen.

Zusammenfassend lassen sich die wesentlichen Merkmale der erfindungsgemäßen Lösung wie folgt charakterisieren:

Zwischen der Fahrkabine 2 und dem Fahrzeugchassis 11 ist die Schnittstellenanordnung 13 vorgesehen, über welche sämtliche Bedienelemente 14 der Fahrkabine 2 mit den zugehörigen Komponenten des Fahrzeugchassis 11 trennbar verbunden sind. Die Schnittstellenanordnung 13 wird durch die Steckverbindung 4 gebildet, an die eine externe Fernsteuerung 6 anschließbar ist, mit der das Fahrzeugchassis 11 oder zumindest einzelne Komponenten davon steuerbar sind.

Des weiteren sind mobile und/oder fahrzeugfeste, ausfahrbare Stützen 7 vorgesehen, mit denen die Fahrkabine 2 anhebbar ist.

Bei Wartungsarbeiten werden zunächst die Schraubverbindungen und danach die Steckverbindung 4 an der Schnittstellenanordnung 13 zwischen der Fahrerkabine 2 und dem Fahrzeugchassis 11 gelöst. An die Schnittstellenanordnung 13 kann die Fernsteuerung 6 angeschlossen werden. Hierauf wird mit Hilfe der Stützen 7 die Fahrerkabine 2 soweit angehoben, dass das Fahrzeugchassis 11 unter der Fahrerkabine 2 weggefahren werden kann.

Alternativ dazu kann nach dem Lösen der Verbindungen zwischen der Fahrerkabine 2 und dem Fahrzeugchassis 11, zunächst die Fahrerkabine 2 angehoben und erst danach, falls nötig, die Steckverbindung 4 an der Schnittstellenanordnung 13 gelöst, bzw. die Fernsteuerung 6 angeschlossen werden.

## Patentansprüche

1. Lastkraftwagen (1),
- mit einem einen Rahmen (9) und Achsen (10) umfassenden Fahrzeugchassis (11) und
- mit einer am Fahrzeugchassis (11) angebrachten Fahrerkabine (2), welche Ausstattungskomponenten, einen Kabinenboden sowie ein Kabinengehäuse und Bedienelemente (14) aufweist,
- wobei die Bedienelemente (14) mit zugehörigen Komponenten des Fahrzeugchassis (11) verbunden sind und zu deren Betätigung dienen,
- wobei die Fahrerkabine (2) lösbar am Fahrzeugchassis (11) befestigt ist und als abnehmbare Einheit ausgebildet ist,
- wobei eine Schnittstellenanordnung (13) vorgesehen ist, über welche sämtliche Bedienelemente (14) der Fahrerkabine (2) mit den zugehörigen Komponenten des Fahrzeugchassis (11) trennbar verbunden sind,
**dadurch gekennzeichnet, dass** das Fahrzeugchassis (11) bei abgenommener Fahrerkabine (2) mit einer externen Bedieneinrichtung (5) steuerbar ist.

2. Lastkraftwagen nach Anspruch 1,
**dadurch gekennzeichnet,**
**dass** die Schnittstellenanordnung (13) durch eine oder mehrere Steckverbindungen (4) gebildet ist.

3. Lastkraftwagen nach Anspruch 2,
**dadurch gekennzeichnet,**
**dass** die eine oder mehreren Steckverbindungen (4) standardisiert ausgebildet sind.

4. Lastkraftwagen nach Anspruch 3,
**dadurch gekennzeichnet,**
**dass** die eine oder mehreren Steckverbindungen (4) durch Schnellkopplungsmittel gebildet sind.

5. Lastkraftwagen nach einem der Ansprüche 1 bis 4,
**dadurch gekennzeichnet,**
**dass** die externe Bedieneinrichtung (5) als Fernsteuerung (6) ausgebildet ist.

6. Lastkraftwagen nach einem der Ansprüche 1 bis 5,
**dadurch gekennzeichnet,**
**dass** die externe Bedieneinrichtung (5) über die Schnittstellenanordnung (13) an wenigstens eine Komponente des Fahrzeugchassis (11) angeschlossen ist.

7. Lastkraftwagen nach einem der Ansprüche 1 bis 6,
**dadurch gekennzeichnet,**
**dass** die Fahrerkabine (2) Aufhängungspunkte (8) aufweist, die mit dem Fahrzeugchassis (11) verbindbar, insbesondere verschraubbar, ausgebildet sind.

8. Lastkraftwagen nach einem der Ansprüche 1 bis 7,
**dadurch gekennzeichnet,**
**dass** mobile und/oder fahrzeugfeste, ausfahrbare Stützen (7) vorgesehen sind, mit denen die Fahrerkabine (2) anhebbar ist.

9. Lastkraftwagen nach Anspruch 8,
**dadurch gekennzeichnet,**
**dass** die fahrzeugfesten Stützen (7) in die Fahrerkabine (2) integriert sind.

10. Lastkraftwagen nach Anspruch 7 sowie nach Anspruch 8 oder 9,
**dadurch gekennzeichnet,**
**dass** die Aufhängungspunkte (8) an den Stützen (7) ausgebildet sind.

11. Lastkraftwagen nach einem der Ansprüche 1 bis 10,
**dadurch gekennzeichnet,**
**dass** die Bedienelemente (14) und die zugehörigen Komponenten wenigstens ein Paar aus folgender Gruppe umfassen: Lenkhandhabe (15) und Lenkeinrichtung, Bremspedal und Bremseinrichtung, Gaspedal und Antriebseinrichtung (12), elektrischer Schalter und Beleuchtungseinrichtung, elektrischer Schalter und Hydrauliksystem.

## Claims

1. Lorry (1)
- with a vehicle chassis (11) comprising a frame (9) and axles (10) and
- with a driver's cab (2) mounted on the vehicle chassis (11), which cab comprises equipment components, a cab floor and also a cab housing and operating elements (14),
- the operating elements (14) being connected to associated components of the vehicle chassis (11) and serving to operate them,
- the driver's cab (2) being fastened detachably to the vehicle chassis (11) and designed as a removable unit,
- an interface arrangement (13) being provided, via which all the operating elements (14) of the driver's cab (2) are connected separably to the associated components of the vehicle chassis (11), **characterized in that** the vehicle chassis (11) is controllable by means of an external operating device (5) when the driver's cab (2) has been removed.

2. Lorry according to Claim 1, **characterized in that** the interface arrangement (13) is formed by one or more plug-type connection(s) (4).

3. Lorry according to Claim 2, **characterized in that** the one or more plug-type connections (4) are of standardized design.

4. Lorry according to Claim 3, **characterized in that** the one or more plug-type connections (4) are formed by quick coupling means.

5. Lorry according to one of Claims 1 to 4, **characterized in that** the external operating device (5) is designed as a remote control (6).

6. Lorry according to one of Claims 1 to 5, **characterized in that** the external operating device (5) is connected to at least one component of the vehicle chassis (11) via the interface arrangement (13).

7. Lorry according to one of Claims 1 to 6, **characterized in that** the driver's cab (2) comprises suspension points (8), which are designed so as to be connectable to, in particular screwable together with, the vehicle chassis (11).

8. Lorry according to one of Claims 1 to 7, **characterized in that** mobile and/or vehicle-mounted, extendable supports (7) are provided, by means of which the driver's cab (2) can be raised.

9. Lorry according to Claim 8, **characterized in that** the vehicle-mounted supports (7) are integrated into the driver's cab (2).

10. Lorry according to Claim 7 and also according to Claim 8 or 9, **characterized in that** the suspension points (8) are designed on the supports (7).

11. Lorry according to one of Claims 1 to 10, **characterized in that** the operating elements (14) and the associated components comprise at least one pair from the following group: steering handle (15) and steering device, brake pedal and brake device, accelerator pedal and drive device (12), electric switch and lighting device, electric switch and hydraulic system.

## Revendications

1. Camion (1),
- avec un châssis (11) comprenant un cadre (9) et des essieux (10) et
- avec une cabine de conduite (2) qui est placée sur le châssis (11) et qui comprend des composants d'équipement, un plancher de cabine ainsi qu'une carrosserie de cabine et des éléments de commande (14),
- les éléments de commande (14) étant reliés avec des composants correspondants du châssis (11) et servant à l'actionnement de ceux-ci,
- la cabine de conduite (2) étant fixée de manière amovible sur le châssis (11) et étant configurée comme unité séparable,
- un ensemble d'interfaces (13), avec lequel tous les éléments de commande (14) de la cabine de conduite (2) sont reliés de manière séparable avec les composants correspondants du châssis (11), étant prévu,
**caractérisé en ce que** le châssis (11) peut, lorsque la cabine de conduite (2) est enlevée, être manoeuvrée au moyen d'un dispositif externe de commande (5).

2. Camion selon la revendication 1, **caractérisé en ce que** l'ensemble d'interfaces (13) est formé par une ou plusieurs liaison(s) enfichable(s) (4).

3. Camion selon la revendication 2, **caractérisé en ce que** l'une des ou les plusieurs liaisons enfichables (4) est/(sont) configurée (s) de manière standardisée.

4. Camion selon la revendication 3, **caractérisé en ce que** l'une des ou les plusieurs liaisons enfichables (4) est/(sont) formée (s) par des éléments d'accouplement rapide.

5. Camion selon l'une quelconque des revendications 1 à 4, **caractérisé en ce que** le dispositif externe de commande (5) est configuré comme télécommande (6).

6. Camion selon l'une quelconque des revendications 1 à 5, **caractérisé en ce que** le dispositif externe de commande (5) est raccordé par l'intermédiaire de l'ensemble d'interfaces (13) à au moins un composant du châssis (11).

7. Camion selon l'une quelconque des revendications 1 à 6, **caractérisé en ce que** la cabine de conduite (2) comprend des points de suspension (8) qui sont configurés pour pouvoir être reliés avec le châssis (11), en particulier pour pouvoir être vissés sur celui-ci.

8. Camion selon l'une quelconque des revendications 1 à 7, **caractérisé en ce que** des appuis mobiles et/ou solidaires du véhicule et pouvant être déployés (7), avec lesquels la cabine de conduite (2) peut être soulevée, sont prévus.

9. Camion selon la revendication 8, **caractérisé en ce que** les appuis solidaires du véhicule (7) sont intégrés dans la cabine de conduite (2).

10. Camion selon la revendication 7 ainsi que selon la revendication 8 ou 9, **caractérisé en ce que** les points de suspension (8') sont configurés sur les appuis (7).

11. Camion selon l'une quelconque des revendications 1 à 10, **caractérisé en ce que** les éléments de commande (14) et les composants correspondants comprennent au moins une paire issue du groupe suivant : volant de direction (15) et dispositif de direction, pédale de frein et dispositif de freinage, pédale d'accélérateur et dispositif d'entraînement (12), commutateur électrique et dispositif d'éclairage, commutateur électrique et système hydraulique.
